Europäisches Patentamt

European Patent Office

Office européen des brevets

(11) Publication number: **0 081 858**
A2

## (12) EUROPEAN PATENT APPLICATION

(21) Application number: **82111655.5**

(51) Int. Cl.³: **B 29 H 17/22**, B 29 H 17/14

(22) Date of filing: **15.12.82**

(30) Priority: **15.12.81 IT 2559481**

(43) Date of publication of application: **22.06.83**
**Bulletin 83/25**

(84) Designated Contracting States: **AT BE DE FR GB LU NL SE**

(71) Applicant: **SOCIETA PNEUMATICI PIRELLI S.p.A., Piazzale Cadorna, 5, I-20123 Milan (IT)**

(72) Inventor: **Caretta, Renato, Viale dei Tigli 16, Gallarate (Varese) (IT)**
Inventor: **Colombani, Bruno, Via Monterotondo, 17, Milano (IT)**

(74) Representative: **Jung, Elisabeth, Dr., Dr. Elisabeth Jung Dr. Jürgen Schirdewahn Dipl.-Ing. Claus Gernhardt Patentanwälte Clemensstrasse 30 Postfach 40 14 68, D-8000 München 40 (DE)**

(54) **Process for manufacturing pneumatic tires and relative device.**

(57) Process and drum for blocking the carcass plies against the bead cores of a tire, said process comprising the steps of expanding in a first cylindrical configuration the carcass plies against the inner surface of the bead cores, of moving the bead cores near each other along the axis of the carcass together with the portions of the carcass plies already blocked with invariable configuration with respect to the inner surfaces of the bead cores, and of expanding further on in cylindrical configuration the carcass plies at the sides of the bead cores. By means of the cited steps it is possible to avoid sliding of the carcass plies on the bead cores in the toric configuration of the carcass and to obtain beads of equal rigidity.

0081858

# PROCESS FOR MANUFACTURING PNEUMATIC TIRES AND RELATIVE DEVICE

The present invention refers to a process and its relative device for manufacturing tires and more particularly for manufacturing tires comprising a radial carcass, a tread and an annular reinforcing structure between the carcass and the tread.

As known, to build up the carcass, at first there is formed a cylindrical sleeve of the carcass ply or plies and then the cylindrical sleeve is shaped to toric configuration. Subsequently the annular reinforcing structure and the tread are applied to the carcass.

According to a known solution, this process is accomplished with only one expandable drum constituted substantially by three bladders placed side by side, on which all the elements constituting the carcass are arranged. Said elements are mainly the sidewalls, the reinforcing strips and the carcass plies.

On the so formed sleeve and at a predetermined distance from the ends thereof there are arranged the bead cores, and the zones of the drum near the bead cores are expanded so that the carcass plies are brought against the inner surface of the bead cores.

In a further step the central bladder is inflated and the bead cores are simultaneously drawn in axial sense toward each other so as to torically shaping the carcass, and at last the lateral bladders are inflated causing the turn-up of all the elements previously arranged around the bead cores.

Subsequently, as already said, the annular reinforcing structure and the tread are applied to the carcass.

Unfortunately, this process is unsatisfactory in some cases, in particular, as verified, owing to possible sliding of the carcass plies around the bead cores during the expansion of the central bladder for the toric shaping of the carcass to toric configuration.

Generally, the cited drawback can take place with any whatsoever type of carcass, but more frequently when the carcass is constituted by a plurality of plies or by a metallic ply; in fact it is considered that to a higher bending stiffness of the carcass plies corresponds a lesser capacity of the plies to become deformed for following the profile of the bead cores when the building drum is expanded to press the plies between the bead core and the bead seat purposely provided on the drum.

Consequently during the expansion of the central bladder, just when the thrusts on the carcass are more intense, there can occur a sliding of the outermost ply with respect to the innermost one around the bead cores and also dissimilar slidings in the two beads.

As it can be understood, to the sliding of the ply corresponds a resistant structure of the bead different from the wished optimal one and/or also a geometrical configuration different between the two beads and unacceptable.

Also there is a further solution of a process for manufacturing a pneumatic tire, known as two step building up and based on the use of two drums instead of only one

-3-

drum as in the single step process mentioned before.

According to this solution the carcass is formed to cylindrical configuration on a first rigid collapsible drum.

The bead cores are then applied to the carcass plies at the shoulders of the drum, usually of the "undercut" type to permit the bead of the carcass to be made already in the final configuration of the pneumatic tire, i.e. in such a way that only the part of the carcass having cylindrical configuration and arranged on the outer surface of the drum between the shoulders, becomes subjected to a shaping to toric configuration on a second expandable drum.

However, also in this solution there result sometimes, in the case of carcasses having a certain bending stiffness, an imperfact adaptation of the plies on the drum shoulders and an inexact construction of the beads or also a different construction between bead and bead.

In the subsequent toric configuration either for the cited reasons or for a combination with other not easily explainable conditions, slidings of the plies around the bead cores happened again.

The two step building up process could still be carried out with two drums, the first of which in practically flat configuration without shoulders of "undercut" type. In this case the carcass is practically cylindrical for its whole length from bead to bead.

Unfortunately, in the subsequent step on the second drum, owing to the expansion of the carcass, the zone of the beads is obliged to rotate for passing from the cylindrical configuration received on the flat drum to the toric one of the carcass profile in formation.

Consequently the carcass is subjected to stresses in the zone nearer the bead cores with strong deformations of the beads and slidings between the carcass ply or plies and the bead cores.

It can be thought to oppose the tendency of sliding of the plies by making recourse to the use of suitable bells or rings whose inner profile is such as to mate faithfully and to press the beads during the shaping to toric configuration of the carcass on the expandable drum stronger to the carcass profile, i.e. by blocking the plies against the bead cores when the inflation pressures are higher.

As it can be understood, it is necessary to provide particular equipment supplementary to the drum for performing the second step, together with specific means for synchronism and movement of the two bells, means, as it can be easily understood, preferably to be avoided.

On the other hand, the cited equipment has a limited field of use, possibly for radial tires of simple manufacture     usually for textile monoply carcasses.

Consequently, all the cited solutions, in particular for the construction of tires having multiply or metallic carcass, appear unsuitable for effecting a reliable blocking between the carcass plies being in cylindrical configuration and the bead cores and this circumstance can lead as a negative consequence to an undesired or anomalous sliding between the carcass plies and the bead cores during shaping to toric configuration.

Further it is known to expand the carcass plies against the bead cores forcing said bead cores to penetrate into appropriate cavities or seats already provided at the ends of the cylindrical drum for performing the first step.

These cavities can have a rectangular configuration in a plane axial to the drum or a different configuration, for example, with the lateral walls axially outermost to the drum, inclined, so that during the expansion of the whole drum surface the bead cores in moving nearer to each other penetrate more and more into the cavities.

These solutions have the drawback of causing during the expansion sliding of the carcass ply from the two ends of the drum towards the center.

In fact, the ply must penetrate into the cavities and is obliged to follow a longer run with respect to the original one when it is arranged on the drum and since the ply has the same length, as already said, must remain subjected to sliding actions from the bead core outside towards the inside.

Unfortunately, in this case owing to the friction of the materials in contact with one another it is possible to have non controllable relative movements between the carcass ply or plies and bead cores with possible intolerable abrasion conditions in the materials.

Then, in case of inclined walls in each cavity possible stumbles of the bead cores take place during the approaching step with unavoidable deviations of the plane, within which the bead cores lie, from the predetermined optimal orientation perpendicular to the drum axis, the whole with unacceptable consequences for a regular formation of the beads in a pneumatic tire.

Therefore, the present invention aims to provide a process and relative device for manufacturing pneumatic tires devoid of the cited drawbacks.

One object of the present invention is a process for manufacturing pneumatic tires comprised by a carcass formed by one or more reinforcing plies, a tread and an annular reinforcing structure between carcass and tread, comprising the steps of:

a) preparing a carcass according to a cylindrical shape on a building drum;

b) applying the bead cores at a distance around the carcass at a predetermined position from the two ends of the drum, with the axes of the bead cores aligned with the carcass axis, and

c) expanding the carcass while maintaining cylindrical configuration to advance it into contact with the bead cores;

said process being characterized by the fact of comprising the steps of:

d) drawing the bead cores towards each other along the direction of the axis of the carcass, with maintaining them in planes perpendicular to the carcass axis, together with the same portions of plies already blocked against the inner surface of the bead cores in step c;

e) expanding further and again maintaining cylindrical configuration the carcass zone comprised between the bead cores for pressing the carcass plies to the axially inner side of the bead cores;

f) expanding the carcass zone laterally to the bead cores for pressing the carcass plies to the axially outer side of the bead cores; and

g) shaping the carcass to toric configuration as known and effecting the step of turning up the carcass ends to the sidewalls of the carcass shaped to toric configuration.

Steps d), e) and f) are the essential steps for the purposes of the invention and guarantee advantageously an optimal preliminary condition for a regular formation of the beads of a pneumatic tire.

In fact, the approaching of the bead cores is effected only after having established by the expansion of the carcass ply a real welding between the portions of the ply itself and the inner surface of the bead cores; consequently the process according to the invention excludes the raising of any movement between the ply and the bead cores.

In other words, the axial movement of the bead cores takes place without causing rubbing and abrasion phenomena between the uncured elastomeric material of the carcass ply and of the covering of the bead core.

Moreover according to the process of the invention after step d), since there has been no relative movement between the carcass ply and the bead cores, the quantity of ply present from the points of contact with the bead cores towards the two ends, is still that established originally and has an equal value on both sides, so that the final step of turning up the ply on the bead cores made with any whatsoever known method, will give rise to two beads equal to each other and of the desired consistence.

The further essential step of expanding the ply comprised in the space defined by the two bead cores assures then the deformation of the ply on the inner sides of the bead cores and this characteristic in combination with the deformation of the ply on the outer sides of the bead cores, effected in any whatsoever step previous or subsequent to that now described, provides an inseparable anchoring between the ply and the bead cores also under the stronger thrusts or forces exerted on the central portion of the ply in the final step of shaping the carcass in a known way to toric configuration.

Also in this further cited essential step, advantageously there is no sliding of the ply from the outside of the bead cores towards the inside since the quantity of ply brought against the inner sides of the bead cores is a portion of ply comprised between the bead cores and is supplied by the relative approaching of the bead cores in the direction of their axes.

Therefore also this step guarantees the formation of two beads of equal rigidity.

Preferably the process is characterized by the fact that the main steps d) and e) are performed at the same time. Practically, the bead cores are approached and simultaneously the carcass expands between the bead cores up to a new cylindrical configuration.

The process can be performed in a single step up to the toric configuration of the carcass or in two steps, namely shaping the carcass, first in cylindrical configuration and then to toric configuration.

In particular when the process of the invention is performed in two steps, the blocking of the carcass ply on the sides of the bead cores permits a sure and immediate centering operation of the carcass itself in the zone of the bead cores on the bead seats of the drum used in the second step.

A further object of the present invention is a drum for building up carcasses of pneumatic tires comprising at least a reinforcing ply wound in the form of a sleeve on the drum and a pair of bead cores arranged around the drum and at a distance from said ply in proximity of the ends with the axes of the bead cores aligned with the drum axis, said drum being characterized by the fact that it comprises at least three distinct and separated parts, a central part and two lateral parts, said parts being in cylindrical configuration are simultaneously radially expandable in equal amounts with respect to the axis of the drum, said amounts being correspondent to the carcass ply blocked between the said lateral parts and the inner surface of the bead cores, said central part being still in cylindrical configuration is more radially expandable with regard to and subsequently to the maximum radial expansion of said lateral parts to block said ply against the bead cores, and said lateral parts can be approached toward each other in axial direction of the drum when the carcass ply is blocked against the bead cores.

The present invention will be better understood by the following detailed description made by way of a non limiting example with reference to the figures of the enclosed sheet of drawing in which

figure 1 shows in a transversal partial view a drum for performing the process of the invention;

figures 2 to 4 show subsequent working steps of the drum of figure 1.

Now it is explained a process and relative device for manufacturing a pneumatic tire, for example, of the type comprising a radial carcass constituted by a single ply or by a plurality of plies to be turned up around a pair of bead cores (for example having circular section), an annular reinforcing structure and a tread.

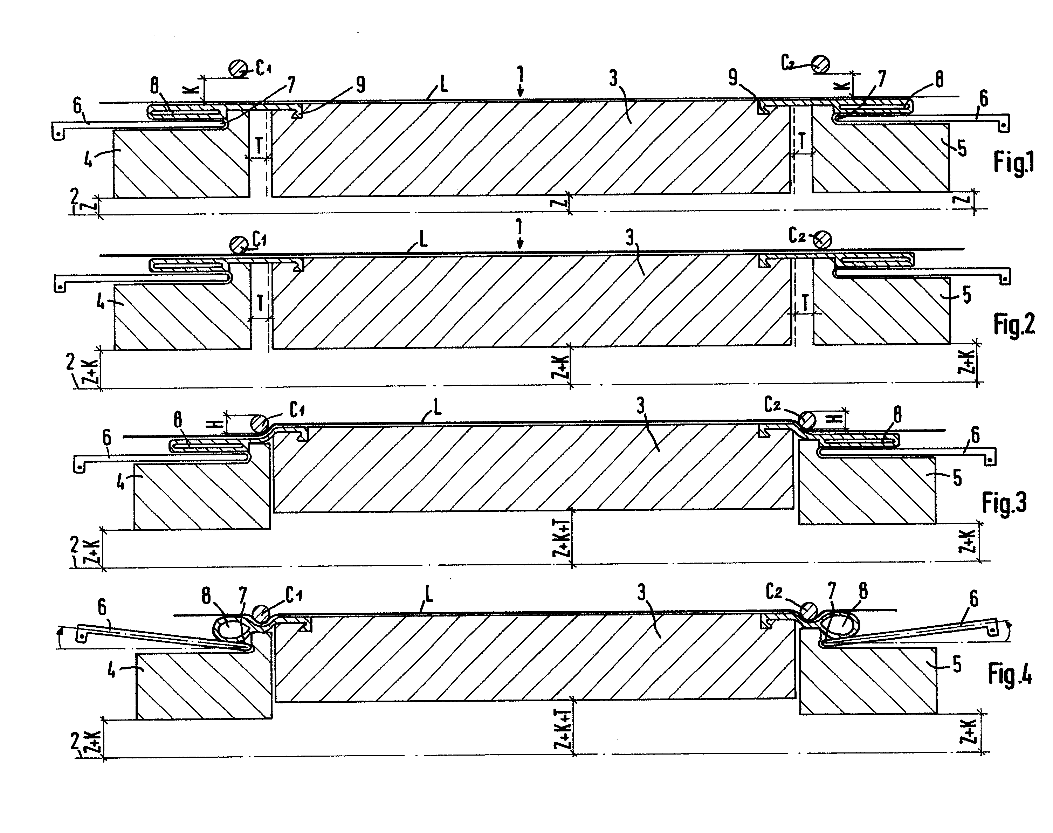

The process for manufacturing the pneumatic tire is performed by making use of two drums, the first of which, drum 1, figure 1, constitutes one object of the present invention and is related to the manufacture of the carcass according to a cylindrical configuration, the second of which (not shown) is of the expandable type for shaping the carcass to toric configuration and is not be shown since it may be of any known structure.

The drum 1 is rigid, substantially cylindrical and rotates around a shaft indicated in figure 1 by the axis of rotation 2.

0081858

In its more general aspects, the drum 1 comprises at least three distinct parts, a central part 3 and two lateral parts 4, 5.

Said parts 3, 4, 5 are apt to form the seats for blocking the carcass plies and the further elements, usually arranged in annular configuration around the plies, against the bead cores already arranged at a predetermined distance around the drum 1 and already provided, if desired, with the relative elastomeric fillers.

According to a characteristic of the invention the two seats of the drum 1 must still be formed when the drum 1 is in the starting cylindrical configuration corresponding to the arrangement of the carcass plies (figure 1).

The construction of the seats, i.e. the formation of their bottom and the two lateral walls, is carried out subsequently when, as explained later, it is desired to establish the blocking of the plies not only on the base, but also on the opposite sides of the bead cores.

The drum parts 3, 4, 5 are formed by a plurality of sectors forming a cylindrical configuration and being simultaneously and radially movable in equal amounts to bring the carcass plies into contact with the inner surface of the bead cores $C_1$, $C_2$.

The central part 3 is then further on radially movable, always in cylindrical configuration, as regards the maximum expansion position reached by the lateral parts 4, 5 to bring the plies into contact with on side surface of the bead cores $C_1$, $C_2$ (figure 3).

Also, the invention provides a further possibility of axial and no longer radial movement of the lateral parts 4, 5.

In the preferred embodiment the lateral parts 4, 5 are separated from the central part 3 by a predetermined distance and it is foreseen that a portion T of said distance is annulled during the operation of the drum 1.

Moreover, elongated elements 6. of known type are arranged in association with the lateral parts 4, 5; said elements 6 are connected to the sectors by means of hinges 7 and above said elements 6, there is arranged an expandable continuous cylindrical annular covering 8, which is preferably constituted by a closed bag having annular configuration, said bag being known in the mechanism for turning up the carcass plies and comprising a lateral extension as a single layer applied with one end 9 to the central part 3 of drum 1.

Practically, as it will be clear during the operation, the bag 8 and the end 9 are arranged in such a way that the expansion of the bag 8 takes place freely towards the outer side of the bead core C and said elements constitute therefore in the described and illustrated embodiment a further means in combination with the presence of the elements 6 to obtain a compressive radial expansion effect of a portion of the lateral part 4 or 5 greater than that of the remaining portion of the same lateral part apt to constitute the cylindrical bearing seats for the bead core base.

Clearly, the radial expansion to deform the plies on the outer sides of the bead cores C could be obtained also in another way, for example, with another set of sectors arranged at the side of the sectors of the lateral parts 4 and 5.

In this case, the further set of sectors follows the sectors of the lateral parts 4 and 5 in their axial movements, whereby again the lateral parts in a first radial expansion bring the plies in contact with the base of the bead cores and at last said further set of sectors greatly expands with respect to the lateral parts to bring the plies on the outer sides of the bead cores.

In the illustrated embodiment the sectors of the lateral parts 3, 4, 5 and the elements 6 comprise means for their actuation, not shown in the drawing since they do not constitute an essential part of the invention.

Only by way of example, there is cited here briefly the possibility of effecting the radial movements of the sectors with fluid dynamic means apt to transform an axial thrust of a stem, acting along the shaft of the drum, into a radial thrust transmitted to the sectors.

Also there is cited, as suitable for the said purpose, a known embodiment in which there is foreseen a transmission of motion with a horizontal rack acting along the shaft and a vertical rack connected to the sectors, or also a further embodiment in which the movement of a cam having an inclined surface, moved by a piston obliges a wheel integral with a sector to slide on the profile of the cam.

Otherwise to what cited, the means for causing radial movement of the sectors could be realized with inflatable small bladders according to known techniques used in building drums.

The means for causing axial movements of the lateral sectors towards the central sector  to annul the distance T can be also realized with fluid dynamic controls in which a cylinder connected to the shaft transmits through the stem a thrust to a sleeve arranged around the shaft and comprises guides in which the sectors moved by the inflatable small bladders radially slide.

The angular movement of the elements 6 can be obtained with cylinder and piston means acting on the element 6 or on levers connected to the element 6.

Now there is described the process for manufacturing a radial tire according to the principles of the invention.

On the drum 1, being in the starting cylindrical configuration; i.e. with seats still to be formed, and placed under rotation, there are arranged, (figure 1) symmetrically with respect to the midline of the drum 1, the various elements forming the carcass, from the outer ones, with respect to the finished tire, to the innermost ones, i.e. the sidewalls, the reinforcing strips, the carcass plies.

In the figures of the text, for sake of simplicity, all the elements have been collected in a single layer L and it has been supposed that the distance of the sectors of parts 3, 4, 5 from the axis is Z and is the same for all the sectors.

On the thus formed carcass sleeve there are arranged the bead cores $C_1$ and $C_2$ already associated, if desired, with the related elastomeric fillers.

In figure 1 the bead cores $C_1$ and $C_2$ are supposed to be at a distance K from the ply L. The assembly of the bead cores C with the fillers is kept in position by suitable known devices acting, for example, on the opposite sides of the filler with suction means or with jaws or with similar elements applied on opposite parts either of the bead cores or of the fillers. Said devices are not illustrated since they do not constitute an object of the present invention.

Now there are described the steps for blocking ply L on the bead cores C. At first, there is caused synchronous and equal radial expansion of value K of all the central and lateral sectors until carcass ply L is blocked and forced against the innermost portion of the base surface of the bead cores C (figure 2).

During these steps, the carcass ply L has become expanded favourably with an increase of the diameter between 5 and 10 % without dragging action or traction action exerted on the portion of the ply L arranged on the lateral sectors with respect to that arranged on the other parts of the drum 1 as it could have been possible in this step if only the lateral sectors were expanded radially with respect to the central sectors. Therefore, there is no sliding of the ply L and of the other elements with respect to the bead cores C.

Also, very advantageously in this step there is a uniform moulding of the carcass ply L in the compression zone against the bead cores C.

In fact, in the described solution the sectors of the lateral parts 4, 5 first in contact to each other and then expanded and separated, expand the elastic covering 8 so that also the layer thereof lying below ply L is continuous and the stresses on the material of the plies are distributed practically in a regular way.

In a further subsequent step, there is effected a further radial movement of expansion of the sectors of the central part 3 and at the same time there is determined an axial movement of the lateral parts 4, 5 towards the part 3 tending gradually to annul the distance T (figure 3).

During the movement of the lateral sectors, also the elements 6 move, these latter following the movements of the lateral sectors as permitted to them by the hinged connection 7 both in the first step and in the latter step.

During this step very advantageously the carcass plies (ply L) and the other elements arranged as annular bands do not undergo slidings with respect to the bead cores C.

In fact the plies L have already been blocked during the previous step against the bead cores C and now the bead cores C in parallel lying planes move axially towards the inside together with the plies, with a predetermined axial movement T equal to the radial movement of the sectors of the central part 3.

In substance, the distance T between the central sectors and the lateral ones is chosen at the beginning so that the radial expansion of the central sectors permits to press the plies L on the inner side of the bead cores C without causing tractions or dragging actions of the ends of the plies L from the outside of the two bead cores C.

In practice, there is indicated with H (figure 3) the maximum transversal dimension of the bead core C measured in a plane axial to the drum 1, and the portion of expanded ply L can occupy any one position starting from a value equal at least to 20 % of H up to values also higher than H. In the described example, the portion of expanded ply L passing from the position of figure 2 to that of figure 3, occupies a position comprised between 40 and 60 % of H, for example, about 50 % of H.

In a further step, the plies L in contact with the outer sides of the bead core C are pressed and precisely:

- first, fluid under pressure is sent into the bag 8 (figure 1) obliging this latter to expand with a profile determined by its particular lying with respect to the bead core C;

- then all the elongated elements 6 are rotated around the relative hinges 7 (figure 4) so that the elements 6 press with forde the bag 8 against the plies L which on their turn get deformed going into contact with the outer side of the bead core C.

The cited steps are effected contemporaneously at the two ends of the drum 1.

In the further steps, there are effected the contraction of the various parts of the drum 1, the removal and the transport of the carcass from the drum 1 of figure 1 to the expandable drum for performing the second step.

At last, with known modalities not repeated here, there are effected the further steps of shaping the carcass to toric configuration, of turning up of the plies on the sidewalls of the toric carcass, and of applying the reinforcing annular structure and the tread.

During the toric shaping of the carcass, owing to the considerable anchoring of the plies L to the sides of the bead cores C, any sliding of the plies L themselves with respect to the bead cores C, as occured in the state of the art, is favourably avoided.

Consequently, the beads of the finished tire show the desired geometrical configuration and stiffness.

As a demonstration of the invention of the present process it is stressed how the step of applying the plies L on the axially inner sides of the bead cores C takes place without movement thereof from the end towards the center.

This characteristic is exactly the contrary of what happens in the state of the art, where the radial expansion of the whole drum surface, comprising the cavities for the bead cores already preconstituted, obliges the ply to slide with respect to the bead core to conform itself less or more to the profile of the cavity retiring from the ends of the drum.

The process according to the invention as already explained does not require the returning of the ply L from the ends of drum 1 since after having bound with a first expansion the base of the bead core C to the underlying ply portion in an invariable manner for the further duration of the same process, it provides the ply L to be deformed against the inner sides of the bead cores C through an axial approaching of the bead cores C to which said underlying portions of ply L are anchored.

Consequently an axial movement of the said portion of plies L anchored to the bead cores C constitutes an essential characteristic to permit a perfect anchoring of the plies L on the inner sides of the bead cores C and said characteristic is very unexpected since one should have expected in obvious way that the anchoring of the plies on the inner sides of the bead core involved only radial movements and not also a movement in an axial direction where among other things, according to a solution of the state of the art cited here, it was possible to verify  undesired slidings and rubbings between plies and bead cores.

Although the present invention has been described with respect to a preferred embodiment, it is understood that the invention includes in its scope any other alternative embodiment accessible to a technician of this field.

What is claimed is:

1.    Process for manufacturing pneumatic tires comprised by a carcass formed by one or more reinforcing plies, a tread and a reinforcing annular structure between carcass and tread, comprising the steps of:

a) preparing a carcass according to a cylindrical configuration on a building drum;
b) applying the bead cores at a distance around the
   carcass at a predetermined point from the two ends
   of the drum, with the axes of the bead cores aligned
   with the axis of the carcass,
c) radially expanding the carcass maintaining the
   cylindrical configuration up to advancing it into contact with the bead cores;

said process being characterized by the fact of comprising the steps of:

d) drawing the bead cores near each other, along the
   direction of the axis of the carcass with lying planes
   perpendicular to the axis of the carcass, together
   with the portions of the carcass plies already blocked
   against the inner surface of the bead cores in step
   c;
e) radially expanding further on and still maintaining
   the cylindrical configuration the carcass zone comprised between the bead cores for pressing the carcass
   plies on the axially inner sides of the bead cores;
f) radially expanding the carcass zone laterally of the
   bead cores for pressing the carcass plies on the
   axially outer sides of the bead cores; and
g) shaping the carcass to a toric configuration as known and effecting the step of turning up the carcass ends on the sidewalls of the torically deformed carcass.

2. Process as in claim 1, characterized by the fact that the steps d) and e) take place at the same time.

3. Process as in claim 1 or 2, characterized by the fact of expanding the said plies in correspondence of the radially innermost surface of the bead core with an expansible elastic continuous covering arranged in annular form at the ends of the drum.

4. Process as in any one of the preceding claims, characterized by the fact of expanding and compressing said plies on the outer sides of the bead cores with an elastic bladder arranged annularly at the end of the drum by expanding said bladder freely in a lateral position outside of the bead core.

5. Process as in any one of the preceding claims, characterized by the fact of expanding the reinforcing ply comprised between the bead cores up to a position at least equal to 20 % of the maximum transversal dimension of a bead core measured in an axial plane of the carcass and preferably comprised between 40 % and 60 % of said maximum transversal dimension.

6. Drum for building up carcasses of pneumatic tires comprising at least a reinforcing ply (L) wound in the form of a sleeve on the drum (1) and a pair of bead cores ($C_1$, $C_2$) arranged around the drum and at a distance from said ply in proximity of the end with the axes of the bead cores aligned with the axis of the drum, said drum being characterized by the fact of comprising at least three distinct and separate parts (3, 4, 5), a central part (3) and two lateral parts (4, 5), said parts being in cylindrical configuration are simultaneously and radially expandable in equal amounts with respect to the axis of the drum, said amount being correspondent to the carcass ply blocked between the two lateral parts and the inner surface of the bead cores, said central part being more radially expandable in cylindrical configuration with regard to and subsequently to the maximum expansion of the said laterial parts to block said ply against the bead cores, said lateral parts can be approached toward each other in axial direction of the drum when the carcass ply is blocked against the bead cores.

7. Drum as in claim 6,
characterized by the fact of comprising means (8) for radially expanding the ply on the outer sides of the bead cores.

8. Drum as in claim 6 or 7,
characterized by the fact that said lateral parts (4, 5) are at a distance (T) from the central part (3) and axially movable to annul said distance.

9. Drum as in any one of the preceding claims,
characterized by the fact that said expandable parts (3, 4, 5) are formed by sectors.

10. Drum as in claim 9,
characterized by the fact of comprising means for the radial movement of the sectors.

Fig.1

Fig.2

Fig.3

Fig.4

0081858